(19) Europäisches Patentamt
European Patent Office
Office européen des brevets

(11) **EP 3 372 340 A1**

(12) **EUROPÄISCHE PATENTANMELDUNG**

(43) Veröffentlichungstag:
**12.09.2018 Patentblatt 2018/37**

(21) Anmeldenummer: **17020094.3**

(22) Anmeldetag: **10.03.2017**

(51) Int Cl.:
*B23Q 15/00* (2006.01)  *G05B 19/401* (2006.01)
*G01N 25/18* (2006.01)  *G01N 25/20* (2006.01)
*G05B 19/4093* (2006.01)  *B23D 59/00* (2006.01)
*B23Q 17/20* (2006.01)  *B23Q 17/24* (2006.01)
*G01N 33/46* (2006.01)  *B07C 5/34* (2006.01)
*G01N 33/20* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Scheppach Fabrikation von Holzbearbeitungsmaschinen GmbH**
**89335 Ichenhausen (DE)**

(72) Erfinder: **Bindhammer, Markus**
**86316 Friedberg (DE)**

(74) Vertreter: **Munk, Ludwig**
**Patentanwälte Munk**
**Prinzregentenstraße 3**
**86150 Augsburg (DE)**

(54) **VERFAHREN ZUR STEUERUNG EINES ELEKTROWERKZEUGS UND ZUR DURCHFÜHRUNG DES VERFAHRENS EINGERICHTETES ELEKTROWERKZEUG**

(57) Die Erfindung betrifft ein Verfahren zur Steuerung eines Elektrowerkzeugs, wie z.B. einer Bohrmaschine, einer Kapp-, Kreis- oder Stichsäge, welches zumindest ein Bearbeitungswerkzeug wie z.B. einen Bohrer oder ein Sägeblatt zur Bearbeitung von Werkstücken (3) aus unterschiedlichen Materialien, wie z.B. Holz, Metall oder Kunststoff aufweist.

Die Erfindung zeichnet sich die folgenden Schritte aus:
Ermitteln der Abkühlungskonstante des zu bearbeitenden Werkstücks (3) aus vorher erfassten Messwerten,
Bestimmen des Werkstückmaterials aus der ermittelten Abkühlungskonstante, Vorgeben von zur Bearbeitung des Werkstücks (3) aus dem bestimmten Werkstückmaterial mit dem Elektrowerkzeug geeigneten Anfangswerten für Maschinenparameter wie Vorschub, Drehzahl und Drehmoment,
Speichern der Anfangswerte zur Inbetriebsetzung des Elektrowerkzeugs bei auf die Anfangswerte eingestellten Maschinenparametern und/oder Inbetriebsetzen des Elektrowerkzeugs bei auf die Anfangswerte eingestellten Maschinenparametern.

Die Erfindung betrifft ferner ein zur Durchführung des Verfahrens eingerichtetes Elektrowerkzeug.

Fig. 1

**Beschreibung**

Die Erfindung betrifft ein Verfahren zur Steuerung eines Elektrowerkzeugs gemäß dem Oberbegriff des Anspruchs 1, sowie ein hierfür vorgesehenes Elektrowerkzeug gemäß dem Oberbegriff des Anspruchs 10.

Im Rahmen der vorliegenden Erfindung wird mit einem Elektrowerkzeug eine elektrisch angetriebene Werkzeugmaschine, wie beispielsweise eine Handbohrmaschine, eine Handkreis- oder Stichsäge oder ähnliche, auch stationäre Werkzeugmaschinen, wie beispielsweise eine Tischkreissäge gemeint.

Bei derartigen Werkzeugmaschinen ist es aus Sicherheitsgründen schon vorgeschlagen worden, mittels Sensoren im Arbeitsbereich der Werkzeugmaschine zu erfassen, ob dort eine Gliedmaße des Maschinenbedieners ist, so dass man dann entsprechend reagieren kann, beispielsweise die Werkzeugmaschine stoppen kann, um schwerwiegende Unfälle zu verhindern. So zeigt die europäische Patentanmeldung EP 2 386 383 A1 eine Werkzeugmaschinenüberwachungsvorrichtung mit einer Erkennungseinheit zur Anwesenheitserkennung von menschlichem Gewebe in einem Werkzeugmaschinenarbeitsbereich mittels der spektralen Auswertung einer optischen Strahlung. Fotodioden erfassen die Reflexion eines LED-Infrarotlichts. Danach wird die erfasste Antwort mit in einer Datenbank gespeicherten Werten verglichen, denen jeweils die Information "menschliches Gewebe da" / "nicht da" zugeordnet ist.

Ähnliches zeigen die europäischen Patentanmeldungen EP 2 073 954 A1 und EP 2 064 480 A1, wobei ein Ultrabreitband-Radarsensor anstatt den Fotodioden zum Einsatz kommt.

Weitere Sicherheitsmaßnahmen an Werkzeugmaschinen, wie z.B. Kreissägen betreffen die Vermeidung von Unfällen aufgrund der Überhitzung des Bearbeitungswerkzeugs. So heizen sich beim Sägen die Sägeblätter durch die dabei auftretende Reibung auf. Beim Arbeiten mit überhitzten Sägeblättern können lebensgefährliche Risse entstehen. Zur Vermeidung der Überhitzung des Sägeblatts ist daher beispielsweise in der deutschen Gebrauchsmusterschrift DE 20 2013 007 344 U1 vorgeschlagen worden, mittels Infrarotsensoren die Oberflächentemperatur des Sägeblatts zu erfassen und als Eingangsparameter für eine Werkzeugsteuerung zu nehmen, die z.B. die Drehzahl des Sägeblatts entsprechend steuert.

Weitere Sicherheitsmaßnahmen zielen darauf ab, zu erkennen, ob in einem zu bearbeitenden Werkzeug ein Fremdkörper enthalten ist, also etwa bei einem zu sägenden Brett ein Nagel, siehe beispielsweise die deutsche Patentanmeldung DE 10 2008 054 701 A1.

Unterschiedliche Materialien weisen unterschiedliche Abkühlungskonstanten auf, welche beispielsweise nach der sogenannten Laser-Flash-Analyse-Methode ermittelt werden können. Neben der Abkühlungskonstante weisen unterschiedliche Materialien auch jeweils unterschiedliche Temperatur- bzw. Wärmeleitfähigkeiten auf. Der Einsatz des Laser-Flash-Analyse-Verfahrens zur Ermittlung von Temperatur- bzw. Wärmeleitfähigkeit wird z.B. in den US-Patentdokumenten US 2016/033,431 A1, US 2014/3301,424 A1 und US 4928254 in unterschiedlichen Ausprägungen beschrieben.

Ausgehend von den bekannten, mit Sicherheitssensoriken ausgerüsteten Elektrowerkzeugen der vorstehend beschriebenen Art ist es Aufgabe der vorliegenden Erfindung, die Bedienung des Elektrowerkzeugs zu verbessern, sowie dessen Lebensdauer zu verlängern und die Betriebssicherheit zu erhöhen.

Diese Aufgabe wird hinsichtlich eines Steuerverfahrens für ein Elektrowerkzeug mit den Merkmalen des Anspruchs 1 gelöst, hinsichtlich des Elektrowerkzeugs selbst mit den Merkmalen des Anspruchs 10.

Die Erfindung betrifft wie gesagt ein Elektrowerkzeug, wie z.B. eine Bohrmaschine, eine Kapp-Kreis- oder Stichsäge, aber insbesondere ein als Handwerkzeug ausgebildetes Elektrowerkzeug, welches zumindest ein Bearbeitungswerkzeug, z.B. einen Bohrer, ein Sägeblatt oder ein Sägeband aufweist und sich zur Bearbeitung von Werkzeugen aus unterschiedlichen Materialien eignet. So können mit einer Bohrmaschine beispielsweise Werkzeuge aus Holz, Metall oder Kunststoff bearbeitet werden.

Das erfindungsgemäße Steuerungsverfahren für das Elektrowerkzeug zeichnet sich durch die folgenden Schritte aus:

Ermittlung der Abkühlungskonstante des zu bearbeitenden Werkstücks aus vorher erfassten Messwerten, Bestimmen des Werkstückmaterials aus der ermittelten Abkühlungskonstante, Vorgeben von zur Bearbeitung dieses Werkstücks mit dem Elektrowerkzeug geeigneten Anfangswerten für Maschinenparameter wie Vorschub, Drehzahl und Drehmoment des Elektrowerkzeugs, und Speichern der Anfangswerte zur Inbetriebsetzung des Elektrowerkzeugs bei auf die Anfangswerte eingestellten Maschinenparametern bzw. Inbetriebsetzen des Elektrowerkzeugs bei auf die Anfangswerte eingestellten Maschinenparametern. Selbstverständlich kann das Steuerungsverfahren den anschließenden Bearbeitungsschritt, in dem das Werkstück mit dem Elektrowerkzeug bei auf die Anfangswerte eingestellten Maschinenparametern bearbeitet wird, ebenfalls umfassen. Die Bearbeitung kann dabei entweder durchgängig bei auf die Anfangswerte eingestellten Maschinenparametern erfolgen oder zumindest ausgehend von auf die Anfangswerte eingestellten Maschinenparametern, wobei der Wert der Maschinenparameter im Arbeitsverlauf nachjustierbar sein könnte, beispielsweise im Ansprechen auf weitere Eingangsgrößen, wie z.B. einer Temperaturänderung des Bearbeitungswerkzeugs des Werkstücks oder einem erfassten Ausnahmezustand, wie z.B. die Anwesenheit von menschlichem Gewebe im Bearbeitungsbereich. Das erfindungsgemäße Elektrowerkzeug ist entsprechend zur Durchführung des Steuerungsverfahrens eingerichtet und weist dementsprechend die dafür nötige Soft- und Hardware auf.

Dies kann zum Einen eine Maschinensteuerung sein, die zur Ermittlung der Abkühungskonstante des zu bearbeitenden Werkstücks aus vorher erfassten Messwerten, zur Bestimmung des Werkstückmaterials aus der ermittelten Abkühlungskonstante, zum Vorgeben von zur Bearbeitung des Werkstücks aus dem bestimmten Werkstückmaterial mit dem Elektrowerkzeug geeigneten Anfangswerten für Maschinenparameter wie Vorschub, Drehzahl und Drehmoment sowie zur Speicherung der Anfangswerte zur Inbetriebsetzung des Elektrowerkzeugs bei auf die Anfangswerte eingestellten Maschinenparametern und/oder zur Inbetriebsetzung des Elektrowerkzeugs bei auf die Anfangswerte eingestellten Maschinenparametern eingerichtet ist.

Die Maschinensteuerung kann hierfür einen Mikrocontroller oder einen Mikroprozessor mit geeigneten Datenspeichern umfassen, auf der entsprechende Steuerroutinen abgelegt sind. Die Maschinensteuerung kann ferner eine lokal oder entfernt abgespeicherte Datenbank umfassen, in der die Abkühlungskonstanten bestimmter Materialien abgelegt sind, so dass beim Bestimmen des Werkstückmaterials aus der ermittelten Abkühlungskonstante auf die Datenbank, beispielsweise in Form einer Lookup-Tabelle zurückgegriffen werden kann, bzw. das einer ermittelten Abkühlungskonstante zugeordnete Werkstückmaterial aus der Datenbank ausgewählt werden kann. Die Maschinensteuerung kann ferner eine Datenbank mit für ein bestimmtes Material geeigneten Anfangswerten für die Maschinenparameter umfassen, so dass das Vorgeben bzw. Voreinstellen des Elektrowerkzeugs auf diese Anfangswerte durch Auswahl der Anfangswerte aus der entsprechenden Datenbank erfolgen kann. Weiterhin kann auch eine Zuordnung von geeigneten Anfangswerten für die Maschinenparameter zu unterschiedlichen Werkzeugmaterialien entsprechenden Werten für die Abkühlungskonstante in Datenbankform als Teil der Maschinensteuerung vorhanden sein, so dass der Verfahrensschritt des Bestimmens des Werkstückmaterials aus der ermittelten Abkühlungskonstante und dann das Vorgeben der Anfangswerte in Abhängigkeit von dem bestimmten Werkzeugmaterial entsprechend abgekürzt bzw. vorab bei der Erstellung der entsprechenden Datenbank vorgenommen werden kann.

Die Datenbank bzw. die Datenbanken kann bzw. können in nachträglich erweiterbarer Form vorgehalten werden, um Datensätze für neue Materialien nachrüsten zu können. Es wäre auch denkbar, eine Lernfunktion zur Übernahme einmal bei einer bestimmten Abkühlungskonstante verwendeter Maschinenparameterwerte vorzusehen.

Vorteilhaft werden zur Ermittlung der Abkühlungskonstante Temperaturwerte erfasst, und zwar weiterhin bevorzugt berührungslos. Entsprechend weist das Elektrowerkzeug vorteilhaft zumindest einen Temperatursensor, weiterhin bevorzugt einen berührungslos arbeitenden Temperatursensor wie z.B. einen Infrarot-Temperatursensor auf.

Die zu erfassenden Temperaturwerte können dabei naturgemäß Werkstücktemperaturwerte umfassen, da ja dessen Abkühlungskonstante ermittelt werden soll. In Abwandlung der Erfindung wäre es aber ebenso denkbar, anstatt oder ergänzend zur Abkühlungskonstante weitere, das Werkstückmaterial definierende, temperaturabhängige Konstanten, wie beispielsweise die Wärme- oder Temperaturleitfähigkeit aus den Temperaturwerten zu bestimmen. So wäre es beispielsweise denkbar, an einem punktuell aufgeheizten Werkstück die Temperatur zu erfassen und an einem vom Heizpunkt um einen bekannten Abstand beabstandeten Punkt die sich nach einer bestimmten Zeit einstellende Temperatur, um so die Temperaturleitfähigkeit des Werkstücks zu bestimmen, oder daraus seine Abkühlungskonstante abzuleiten.

Bevorzugt im Sinne einer einfachen und mit wenig Aufwand gangbaren Lösung wird zur Ermittlung der Abkühlungskonstante jedoch die Umgebungstemperatur gemessen, oder, falls beispielsweise vorbekannt, vorgegeben, und ferner das Werkstück gegenüber der Umgebungstemperatur erwärmt, bis eine vorgegebene Anfangstemperatur erreicht ist, und dann, nach Ablauf einer zu definierenden bzw. vorgegebenen Zeitdauer, die Ist-Temperatur des Werkstücks gemessen und zwar bevorzugt an einem Punkt auf dem Werkstück, an dem das Werkstück vorher erwärmt worden ist. Zur Erwärmung des Werkstücks kann das Elektrowerkzeug vorzugsweise eine Laserstrahlquelle, insbesondere eine Laserdiode aufweisen, die weiterhin bevorzugt zur Abgabe eines punktförmigen Laserstrahls auf das Werkstück geeignet ist.

Die Abkühlungskonstante lässt sich dann auf einfache Weise gemäß folgender Formel berechnen:

$$k = \frac{1}{t} \cdot \ln\left(\frac{T_A - T_U}{T - T_U}\right),$$

wobei

t: definierter Zeitpunkt
k: Abkühlungskonstante,
$T_A$: Temperatur des Werkstücks zu einem Zeitpunkt $t_0 = 0$,
Tu: Umgebungstemperatur und
T: Temperatur des Werkstücks zu dem definierten Zeitpunkt t ist.

Ist der verwendete IR-Temperatursensor dazu eingerichtet, seine eigene Temperatur, also die Sensortemperatur zu messen, so kann diese als Wert für die Umgebungstemperatur Tu herangezogen werden, wohingegen die Ist-Temperatur T nach dem Ablauf der Zeit t und die Anfangstemperatur $T_A$ auf dem Werkstück gemessen werden können. Vorteilhaft wird das Erwärmen des Werkstücks dabei so durchgeführt, dass das Werkstück nicht beschädigt wird. Die gewünschte Anfangstemperatur $T_A$ soll also unterhalb einer Temperatur liegen, bei der das Werkstück eine Beschädigung erleidet. Dabei wird, während das Werkstück erwärmt wird, vorteilhaft laufend erfasst, ob die gewünschte Anfangstemperatur $T_A$ erreicht ist, wozu weiterhin vorteilhaft der Temperatursensor eingesetzt wird. Es wäre jedoch auch denkbar, eine bestimmte Aufwärmzeit vorzugeben und dann die Anfangstemperatur zu messen.

Um eine Beschädigung des IR-Temperatursensors oder eine Beeinflussung der Messwerte durch reflektierende Laserstrahlung zu verhindern, sind der Temperatursensor und die Laserquelle weiterhin bevorzugt so geschaltet, insbesondere mittels Pulsweitenmodulation, dass sie nie gleichzeitig, sondern abwechseln bzw. aufeinanderfolgend in Betrieb sind.

Um den Einsatz des neu vorgeschlagenen Steuerungsverfahrens insbesondere für ein Handwerkzeug zu vereinfachen, ist dabei der Temperatursensor und/oder die Laserstrahlquelle so an oder auf dem Elektrowerkzeug angebracht, dass er bzw. sie auf einen in Bearbeitungsrichtung des Bearbeitungswerkzeugs vor dem Bearbeitungswerkzeug gelegenen Punkt gerichtet ist, bzw. sind. Vorteilhaft wird das Elektrowerkzeug dann vom Benutzer in Richtung zum zu bearbeitenden Werkstück mit seinem Bearbeitungswerkzeug ausgerichtet, also mit seinem Bearbeitungswerkzeug in die vorgesehene Bearbeitungsrichtung, wobei die Erwärmung des Werkstücks mittels der Laserstrahlquelle und die Werkstücktemperaturmessungen mittels des Temperatursensors im gleichen Zug vorgenommen werden können.

Zur Steigerung der Genauigkeit der Materialbestimmung können weitere Materialeigenschaften des Werkstücks gemessen bzw. aus Messungen ermittelt werden, wie beispielsweise die Reflexion von Laserstrahlung oder auch anderen, auf das Werkstück abgegebenen Strahlungen, z.B. sichtbares Licht oder Wärmestrahlung in einem bestimmten Frequenzbereich bzw. Fasenverschiebungen bei reflektierten Strahlungen etc.. Weiterhin können neben den Materialeigenschaften auch weitere Eigenschaften des Werkstücks zur Voreinstellung der Maschinenparameter herangezogen werden, beispielsweise Abmaße wie die Werkzeugdicke beim Sägen, die Länge des durchzuführenden Schnitts, etc.. Weiterhin können natürlich auch vorgegebene oder voreingestellte Maschinenparameter in die Voreinstellung der Anfangswerte der einstellbaren Maschinenparameter eingehen. Vorgegebene Maschinenparameter könnten beispielsweise die Art des Bearbeitungswerkzeugs sein (z.B. Steinbohrer, Holzbohrer oder Metallbohrer) oder die Art der Kühlung etc..

Anhand der beiliegenden Zeichnung wird eine vorteilhafte Ausführungsform der Erfindung näher erläutert. Die einzige Figur zeigt hierzu lediglich eine Prinzipskizze der Werkzeugsensorik an einem zu bearbeitenden Werkstück.

Das Newtonsche Abkühlungsgesetz lautet in einer seiner Schreibweisen nach gelöster Differentialgleichung

$$k = \frac{1}{t} \cdot \ln\left(\frac{T_A - T_U}{T - T_U}\right),$$

wobei

t: Zeit,
k: Abkühlungskonstante,
$T_A$: Temperatur des Körpers zum Zeitpunkt $t_0 = 0$,
Tu: Umgebungstemperatur,
T: Temperatur des Körpers zum Zeitpunkt t.

Im Rahmen der Erfindung wird eine Anordnung bzw. ein Verfahren vorgeschlagen, um die Abkühlungskonstante eines Körpers bzw. Werkstücks berührungslos zu bestimmen und daraus wiederum, aus welchem Material das Werkstück besteht. Hierzu wird zunächst die Umgebungstemperatur durch einen IR-Temperatursensor 1 gemessen. Es wird dazu angenommen, dass die Sensortemperatur an sich gleich der Umgebungstemperatur Tu ist. Der IR-Temperatursensor 1 ist sowohl in der Lage, seine Sensortemperatur zu bestimmen als auch die Temperatur eines anderen nicht in Berührung mit dem Sensor stehenden Objektes. Nun wird ein punktförmiger Laserstrahl durch eine Laserdiode 2 auf ein zu bestimmendes Werkstück 3 gerichtet, um dieses zu erwärmen. Der IR-Temperatursensor 1 misst dabei die Temperatur des Werkstücks.

Um eine Beschädigung des IR-Temperatursensors 1 oder Beeinflussung der Messwerte durch reflektierende Laserstrahlung zu verhindern, sind die Laserdiode 2 und der IR-Temperatursensors 1 über Pulsweitenmodulation o.ä. beschaltet, d.h. Laserdiode 2 und der IR-Temperatursensor 1 sind nie gleichzeitig in Betrieb, sondern immer nur aufeinander folgend. Ist die gewünschte Anfangstemperatur $T_A$ erreicht, die natürlich unter einer Temperatur liegen muss, die das Werkstück 3 in irgendeiner Weise punktuell beschädigt, wird die Laserdiode 2 abgeschaltet und die Temperatur T des Werkstückes 3 nach einer definierten Zeitspanne t vom IR-Temperatursensors 1 wiederholt gemessen.

Ein zumindest einen Teil einer Maschinensteuerung bildender Mikrocontroller oder Mikroprozessor, über den die Messwerte des IR-Temperatursensors 1 erfasst und gespeichert werden und über den der IR-Temperatursensor 1 und die Laserdiode 2 geregelt werden, errechnet dann die Abkühlungskonstante k und über einen Algorithmus, im einfachsten Fall eine Lookup-Tabelle, das Material, aus dem das Werkstück 3 besteht.

Die vorstehend beschriebene, berührungslos arbeitende Materialerfassung ist, wie nicht explizit dargestellt, in einem Elektrowerkzeug implementiert, vorrangig in einem solchen, welches verschiedene Materialien bzw. Werkstoffarten bearbeiten kann, wie zum Beispiel einer Bohrmaschine oder einer Kapp-, Kreis- oder Stichsäge.

Im Einsatz wird das Elektrowerkzeug vom Benutzer zunächst in Richtung zum zu bearbeitenden Werkstück 3 hin bewegt. Der beschriebene Temperatursensor 1 zeigt dabei in gleicher Richtung wie das Bearbeitungswerkzeug des Elektrowerkzeugs, z. B. ein Bohrer oder Sägeblatt, ebenso die beschriebene Laserdiode 2. Beide sind entsprechend an oder auf dem Elektrowerkzeug angebracht. Der beschriebene berührungslose Materialsensor bestimmt die Materialeigenschaften des zu bearbeitenden Werkstückes 3, beispielsweise ob es sich bei dem zu bearbeitenden Werkstück 3 um Metall, Holz oder Stein handelt. Das Elektrowerkzeug konfiguriert sich also vor dem Beginn der Bearbeitung des Werkstückes 3 selbst, d. h. es werden zum Beispiel Vorschub, Drehzahl und Drehmoment des Bearbeitungswerkzeugs des Elektrowerkzeugs den Materialeigenschaften des Werkstücks 3 elektronisch oder durch entsprechende Aktuatoren angepasst.

Abwandlungen und Modifikationen der gezeigten Ausführungsform sind möglich, ohne den Rahmen der Erfindung zu verlassen.

**Patentansprüche**

1. Verfahren zur Steuerung eines Elektrowerkzeugs, wie z.B. einer Bohrmaschine, einer Kapp-, Kreis- oder Stichsäge, welches zumindest ein Bearbeitungswerkzeug wie z.B. einen Bohrer oder ein Sägeblatt zur Bearbeitung von Werkstücken (3) aus unterschiedlichen Materialien, wie z.B. Holz, Metall oder Kunststoff aufweist, **gekennzeichnet durch** die folgenden Schritte:

   Ermitteln der Abkühlungskonstante des zu bearbeitenden Werkstücks (3) aus vorher erfassten Messwerten,
   Bestimmen des Werkstückmaterials aus der ermittelten Abkühlungskonstante,
   Vorgeben von zur Bearbeitung des Werkstücks (3) aus dem bestimmten Werkstückmaterial mit dem Elektrowerkzeug geeigneten Anfangswerten für Maschinenparameter wie Vorschub, Drehzahl und Drehmoment,
   Speichern der Anfangswerte zur Inbetriebsetzung des Elektrowerkzeugs bei auf die Anfangswerte eingestellten Maschinenparametern und/oder Inbetriebsetzen des Elektrowerkzeugs bei auf die Anfangswerte eingestellten Maschinenparametern.

2. Verfahren nach Anspruch 1, **gekennzeichnet durch** anschließendes Bearbeiten des Werkstücks (3) mit dem Elektrowerkzeug bei auf die Anfangswerte eingestellten Maschinenparametern, wobei die Bearbeitung entweder durchgängig bei auf die Anfangswerte eingestellten Maschinenparametern erfolgt oder zumindest ausgehend von auf die Anfangswerte eingestellten, aber im Arbeitsverlauf nachjustierbaren Maschinenparametern.

3. Verfahren nach Anspruch 1 oder 2, **dadurch gekennzeichnet, dass** zur Ermittlung der Abkühlungskonstante berührungslos Temperaturwerte erfasst werden.

4. Verfahren nach Anspruch 1, 2 oder 3, **dadurch gekennzeichnet, dass** zur Ermittlung der Abkühlungskonstante die Umgebungstemperatur gemessen oder vorgegeben wird, sowie das Werkstück (3) insbesondere berührungslos erwärmt wird, vorzugsweise mittels einer Laserstrahlquelle, z.B. einer Laserdiode (2), bis eine vorgegebene Anfangstemperatur erreicht ist, und dann, nach Ablauf einer vorgegebenen Zeitdauer, die Ist-Temperatur des Werkstücks (3) gemessen wird, woraufhin die Abkühlungskonstante berechnet wird, insbesondere nach folgender Formel:

$$k = \frac{1}{t} \cdot \ln\left(\frac{T_A - T_U}{T - T_U}\right),$$

wobei

     t: definierter Zeitpunkt,
     k: Abkühlungskonstante,
     $T_A$: Temperatur des Werkstücks (3) zu einem Zeitpunkt $t_0 = 0$
     Tu: Umgebungstemperatur,
     T: Temperatur des Werkstücks (3) zu dem definierten Zeitpunkt t.

5. Verfahren nach einem der Ansprüche 1 bis 4, **dadurch gekennzeichnet, dass** zur Ermittlung der Abkühlungskonstante eine Laser-Flash-Analyse durchgeführt wird, insbesondere mittels eines berührungslos arbeitenden IR-Temperatursensors (1), der zur Messung seiner Sensortemperatur als der Umgebungstemperatur und der Oberflächentemperatur des Werkstücks (3) eingesetzt wird, wobei zum Erwärmen des Werkstücks (3) ein punktförmiger Laserstrahl aus der Laserstrahlquelle, insbesondere der Laserdiode (2) auf das Werkstück (3) gerichtet wird.

6. Verfahren nach Anspruch 4 oder 5, **dadurch gekennzeichnet, dass,** während das Werkstück (3) erwärmt wird, laufend erfasst wird, ob die vorgegebene Anfangstemperatur erreicht ist, insbesondere mit dem Temperatursensor, wie z.B. dem IR-Temperatursensor (1).

7. Verfahren nach Anspruch 4, 5 oder 6, **dadurch gekennzeichnet, dass** der Temperatursensor und die Laserstrahlquelle so beschaltet sind, beispielsweise über Pulsweitenmodulation, dass sie abwechselnd in Betrieb sind.

8. Verfahren nach einem der vorhergehenden Ansprüche, **dadurch gekennzeichnet, dass** beim Vorgeben der Anfangswerte für die Maschinenparameter weitere, das Werkstück (3) charakterisierende Werkstückeigenschaften, wie z.B. eine Werkstückdicke berücksichtigt werden, wobei diese Werkstückeigenschaften vorzugsweise ebenfalls aus zumindest einem, mittels zumindest eines Zusatzsensors erfassten Zusatzmesswerten bestimmt werden.

9. Verfahren nach einem der vorhergehenden Ansprüche, **dadurch gekennzeichnet, dass** beim Bestimmen des Werkstückmaterials neben der Abkühlungskonstante ergänzende Werkstückmaterialeigenschaften miteinbezogen werden, beispielsweise ein Reflektionsgrad in einem bestimmten Wellenspektrum, welche aus zumindest einem, mittels zumindest eines Ergänzungssensors erfassten Ergänzungsmesswert ermittelt werden.

10. Elektrowerkzeug, wie z.B. Bohrmaschine, Kapp-, Kreis- oder Stichsäge, mit zumindest einem Bearbeitungswerkzeug wie z.B. einem Bohrer oder einem Sägeblatt zur Bearbeitung vom Werkstücken (3) aus unterschiedlichen Materialien, wie z.B. Holz, Metall oder Kunststoff, **dadurch gekennzeichnet, dass** es zur Durchführung des Verfahrens nach einem der vorhergehenden Ansprüche eingerichtet ist.

11. Elektrowerkzeug nach Anspruch 10, **gekennzeichnet durch** eine Maschinensteuerung, eingerichtet zur Ermittlung der Abkühlungskonstante des zu bearbeitenden Werkstücks (3) aus vorher erfassten Messwerten, zur Bestimmung des Werkstückmaterials aus der ermittelten Abkühlungskonstante, zum Vorgeben von zur Bearbeitung des Werkstücks (3) aus dem bestimmten Werkstückmaterial mit dem Elektrowerkzeug geeigneten Anfangswerten für Maschinenparameter wie Vorschub, Drehzahl und Drehmoment, sowie zur Speicherung der Anfangswerte zur Inbetriebsetzung des Elektrowerkzeugs bei auf die Anfangswerte eingestellten Maschinenparametern und/oder zur Inbetriebsetzung des Elektrowerkzeugs bei auf die Anfangswerte eingestellten Maschinenparametern.

12. Elektrowerkzeug nach Anspruch 10 oder 11, **gekennzeichnet durch** eine Elektronik und/oder eine Anzahl Aktuatoren, um die Anfangswerte einzustellen.

13. Elektrowerkzeug nach Anspruch 10, 11 oder 12, **gekennzeichnet durch** zumindest einen berührungslos arbeitenden Temperatursensor, wie z.B. einen IR-Temperatursensor (1), der zur Messung seiner Sensortemperatur und der Oberflächentemperatur des Werkstücks (3) geeignet ist.

14. Elektrowerkzeug nach einem der Ansprüche 10 bis 13, **gekennzeichnet durch** eine Laserstrahlquelle, z.B. einer Laserdiode (2), geeignet, um einen punktförmigen Laserstrahl auf das Werkstück (3) zu richten.

15. Elektrowerkzeug nach einem der Ansprüche 10 bis 14, **dadurch gekennzeichnet, dass** der Temperatursensor und/oder die Laserstrahlquelle so an oder auf dem Elektrowerkzeug angebracht ist bzw. sind, dass er bzw. sie auf einen in Bearbeitungsrichtung des Bearbeitungswerkzeugs vor dem Bearbeitungswerkzeug gelegenen Punkt gerichtet oder ausrichtbar sind.

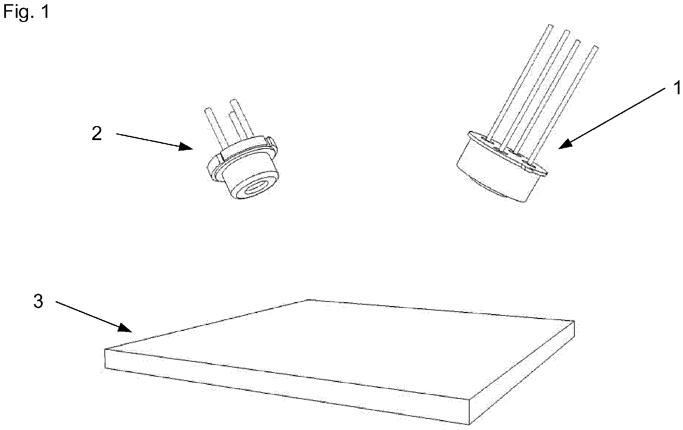

Fig. 1

**Europäisches Patentamt**
**European Patent Office**
**Office européen des brevets**

# EUROPÄISCHER RECHERCHENBERICHT

Nummer der Anmeldung

EP 17 02 0094

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/016240 A1 (KOEGEL JAN [US]) 21. Januar 2016 (2016-01-21) * Absatz [0012] - Absatz [0031]; Abbildungen 1, 2 * ----- | 1-15 | INV. B23Q15/00 G05B19/401 G01N25/18 G01N25/20 |
| A | US 5 489 778 A (BURMESTER INGO [DE] ET AL) 6. Februar 1996 (1996-02-06) * das ganze Dokument * ----- | 1-15 | G05B19/4093 B23D59/00 B23Q17/20 B23Q17/24 |
| A | US 2013/156063 A1 (KIM KEEHOON [KR]) 20. Juni 2013 (2013-06-20) * das ganze Dokument * ----- | 1-15 | G01N33/46 B07C5/34 G01N33/20 |

RECHERCHIERTE SACHGEBIETE (IPC)

B23Q
B23D
G05B
G01N
B07C

Der vorliegende Recherchenbericht wurde für alle Patentansprüche erstellt

| Recherchenort | Abschlußdatum der Recherche | Prüfer |
|---|---|---|
| Den Haag | 22. September 2017 | Tsirigkas, Dimitrios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 17 02 0094

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2017

| Im Recherchenbericht angeführtes Patentdokument | Datum der Veröffentlichung | Mitglied(er) der Patentfamilie | Datum der Veröffentlichung |
|---|---|---|---|
| US 2016016240 A1 | 21-01-2016 | EP 2969433 A1<br>US 2016016240 A1<br>WO 2014164964 A1 | 20-01-2016<br>21-01-2016<br>09-10-2014 |
| US 5489778 A | 06-02-1996 | AT 175023 T<br>CA 2109669 A1<br>CZ 9302456 A3<br>DE 4239479 A1<br>DE 59309244 D1<br>DK 0599153 T3<br>EP 0599153 A1<br>ES 2128383 T3<br>PL 301102 A1<br>US 5489778 A | 15-01-1999<br>22-05-1994<br>15-06-1994<br>26-05-1994<br>04-02-1999<br>23-08-1999<br>01-06-1994<br>16-05-1999<br>30-05-1994<br>06-02-1996 |
| US 2013156063 A1 | 20-06-2013 | KR 20130060257 A<br>US 2013156063 A1<br>WO 2012015077 A1 | 07-06-2013<br>20-06-2013<br>02-02-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2386383 A1
- EP 2073954 A1
- EP 2064480 A1
- DE 202013007344 U1
- DE 102008054701 A1
- US 2016033431 A1
- US 20143301424 A1
- US 4928254 A